# EUROPEAN PATENT SPECIFICATION

(11) **EP 1 995 343 B1**
(45) Date of publication and mention of the grant of the patent: **03.08.2016**
(21) Application number: 08009114.3
(22) Date of filing: 16.05.2008
(51) Int. Cl.: C23C 4/06, C23C 4/10, C23C 4/18

(54) **Method for making a rare earth oxide-containing sprayed plate**
Verfahren zur Herstellung einer seltenerdoxid-haltigen gespritzten Platte
Procédé de fabrication d'une plaque pulvérisée contenant de l'oxyde de terres rares

(30) Priority: 21.05.2007 JP 2007133669
(43) Date of publication of application: 26.11.2008
(73) Proprietor: Shin-Etsu Chemical Co., Ltd., Tokyo (JP)
(72) Inventor: Hamaya, Noriaki, Tokyo (JP); Nakamura, Koji, Tokyo (JP); Iida, Ryoji, Tokyo (JP)
(74) Representative: Ter Meer Steinmeister & Partner

(56) References cited:
- EP-A1- 1 435 501
- EP-A2- 0 794 265
- EP-A2- 1 428 904
- WO-A1-91/00934
- DE-A1- 4 225 779
- GB-A- 2 245 514
- US-A- 3 429 962
- US-A- 3 645 894

## Description

### TECHNICAL FIELD

This invention relates to a method for preparing sprayed thin plates of various rare earth oxide-containing ceramics.

### BACKGROUND ART

Rare earth-based oxide ceramics are generally prepared by molding methods including mold pressing, rubber pressing (or isostatic pressing), slip casting, and doctor blade methods. There is furnished rare earth-based oxide powder. Ceramic compacts are shaped from the powder by any of these molding methods. The compacts are subjected to firing, sintering and working steps until they are finished into products of the predetermined size.

However, where it is desired to prepare rare earth-based oxide ceramic thin plates, especially thin plates having a thickness of up to 5 mm and a volume of at least 50 cm³, by the molding method, cracks occur during the molding step, which makes it difficult to obtain molded compacts. One common solution to this problem involves molding compacts having a greater thickness so as to ensure higher yields of compact formation, firing and sintering the compacts, and grinding or otherwise machining the compacts into thin plates having a thickness of up to 5 mm.

This method, however, is disadvantageous in that as the final thin plate becomes thinner in thickness or greater in volume, the method requires a more amount of source material and a longer time for product finishing. Because of cracking and warpage during sintering, the yield of overall manufacture is substantially reduced, resulting in an increased cost. This is a problem in the manufacture of ceramic thin plates.

For the related technology, reference should be made to patents including JP-A 10-204655, JP-A 6-33215, JP-A 2004-346374, and JP-B 6-55477.

DE 42 25 779 A1 relates to a thin shape body produce from limited formability alloy by plasma spray deposition such as for high temperature fuel cell component manufacture.

EP 1 435 501 A1 relates to a heat-resistant coated member comprising a substrate composed of a material selected from among molybdenum, tantalum, tungsten, zirconium, aluminium, titanium, carbon, and alloys, oxide ceramics, non-oxide ceramics and carbide materials thereof, which is covered with a layer composed primarily of a rare earth-containing oxide.

GB 2 245 514 A1 relates to a method for forming a multiplicity of ring structures having essentially the same internal diameter, wherein a first step in the process is the provision of a mandrel of relatively high thermal coefficient of expansion and the deposit of a layer of unreactive oxide on the surface of the mandrel, and following the oxide coating of the mandrel surface, a layer of a matrix metal of relativel low thermal coefficient of expansion is deposited thereon to form a ring structure on the mandrel, and the coefficient of thermal expansion of the mandril metal and that of the matrix metal are sufficiently different that there is a spontaneous separation of the deposited matrix metal ring structure from the mandrel as the mandrel and deposited layer cool to room temperature, wherein, following the cooling, the matrix metal ring structure can be removed from the mandrel and the mandrel is then re-coated and thus rendered suitable for repetition of the process to deposit yet another matrix ring structure thereon.

WO 91/00934 A1 relates to a process for producing oxide ceramic moulded bodies by thermal spraying of an oxide ceramic material onto a shaping surface, characterized in that the shaping surface consists of a material that does not react with the oxide-ceramic, this material having a thermal expansion coefficient that is different to the thermal expansion coefficient of the oxide ceramic material, the shaving surface is cooled during the coating step and the finished coated shaping surface is quenched, so that the coating is removable from the shaping surface.

### DISCLOSURE OF THE INVENTION

An object of the invention is to provide a method of preparing thin plates of rare earth-based oxide ceramics which are used as equipment members requiring inertness, heat resistance, abrasion resistance, corrosion resistance, plasma resistance and chemical resistance in a simple manner.

The inventors have found that a thin plate of rare earth-based oxide ceramic which is substantially flat with minimized warpage or deflection can be prepared by thermally spraying a rare earth-based oxide ceramic on a selected support, and peeling the sprayed rare earth-based oxide ceramic coating from the support as claimed in claim 1, wherein the sprayed coating spontaneously peels from the support. Any warpage of the sprayed coating can be corrected by further thermally spraying a ceramic to the inner (peeled) surface of the sprayed coating, and optionally, alternately thermally spraying a ceramic to the inner and outer surfaces of the sprayed coating until the predetermined thickness is reached.

The invention provides a method in accordance with claim 1 for preparing a rare earth oxide-containing sprayed plate, comprising thermally spraying a rare earth-based oxide on a carbon support to form a coating having a thickness of up to 5 mm, and peeling the sprayed coating from the support. The peeling step is spontaneous peeling. The sprayed coating peeled from the support has an inner surface as peeled from the support and an outer surface remote therefrom. The method may further comprise the step of thermally spraying a rare earth-based oxide on the inner and/or outer surface of the sprayed coating.

The invention further provides a method for preparing a laminate, comprising thermally spraying a metal or metal compound on a surface of the sprayed plate obtained by the above method.

### BENEFITS OF THE INVENTION

According to the invention, thin plates of rare earth-based oxide ceramics can be prepared by thermal spraying on a support of selected size, without molding, firing and sintering steps. A choice of a proper support shape makes it possible and easy to prepare thin plates of different shapes including polygonal, disc, ring and triangular shapes. By spraying on a support with a plurality of holes, a sprayed thin plate having a plurality of holes can be prepared.

Rare earth-based oxide particles are sprayed on a carbon support to form a coating. The sprayed rare earth-based oxide coating spontaneously peels from the support. Thereafter, thermal spraying is continued on the inner surface of the sprayed coating that is exposed as a result of peeling. A rare earth-based oxide ceramic thin plate with minimized warpage or deflection can thus be manufactured.

The thin plates of rare earth-based oxide ceramics find use as equipment members in many fields where inertness, heat resistance, abrasion resistance, corrosion resistance, plasma resistance and chemical resistance are required. The invention is applicable to commercially available general oxide ceramic powders as well as the rare earth-based oxide ceramic powders.

### DESCRIPTION OF THE PREFERRED EMBODIMENT

The terms "a" and "an" herein do not denote a limitation of quantity, but rather denote the presence of at least one of the referenced item. The terms "inner," "outer," and the like are used herein to distinguish one element from another.

The sprayed plate comprising rare earth oxide according to the invention has a thickness of up to 5 mm, preferably up to 4 mm, more preferably up to 3.5 mm, and even more preferably up to 2.5 mm.

The shape of the sprayed plate is not particularly limited. The sprayed plate may have any desired shape, for example, tetragonal, pentagonal and polygonal shapes, disc shapes, elliptic shapes, triangular shapes, and rings of these shapes having a center opening. The plate should preferably have a volume of at least 50 cm³, more preferably at least 100 cm³, and even more preferably at least 200 cm³. The upper limit of volume is not critical although a volume of up to 2,000 cm³, and especially up to 1,000 cm³ is preferred from the aspect of preventing the plate from being damaged by handling.

The rare earth oxides used herein include rare earth-based oxides are oxides of Y and Er. Also a mixture of a rare earth oxide with an oxide of another metal, typically Group 3B metal element is useful as well as a complex oxide of a rare earth oxide and an oxide of another metal, typically Group 3B metal element. Exemplary of the Group 3B metal are B, Al, Ga, In, and Ti elements.

Where a mixture or a complex oxide of Y or Er and another metal oxide is used, the content of Y or Er is 10% to 90% by weight, and preferably 30% to 80% by weight based on the total weight of rare earth and other metal oxides. The coating on the support prior to peeling may consist of more than one rare earth oxide layer.

In preparing the sprayed plate (or rare earth-based oxide ceramic thin plate), there are furnished a support of selected shape and size and a powdered source of rare earth-based oxide to be sprayed.

The support is formed of carbon because the sprayed coating is releasable therefrom. Carbon supports are available as cold isostatic pressed (CIP) members, extruded members, molded members, and composite members of consolidated fibrous carbon, with the CIP members being preferred.

The powdered sources to be sprayed include the rare earth oxides described above, and mixtures and complexes of the rare earth oxides with other metal oxides, especially Group 3B metal oxides, in powdered form. The powder preferably has an average particle size of 3 µm to 70 µm, and more preferably 15 µm to 60 µm. The average particle size as used herein is a D₅₀ value (non-variance) as determined by the microtrack method.

In the method of the invention, the powdered source is thermally sprayed onto the support. Prior to the spraying, the support of selected shape is surface treated by blasting or similar technique, if necessary. The support of selected shape corresponds to a mold used in the standard ceramic molding step. The support, once prepared, may be repeatedly used.

Once the support is prepared, the powdered source is sprayed thereon. The type of thermal spraying is not particularly limited although plasma spraying is preferred. Under preferred thermal spraying conditions including argon and hydrogen gases, a current flow of 500 amperes, and a power of 35 kW, a sprayed coating is deposited on the support.

When the coating deposited on the support by spraying reaches a certain thickness, the coating spontaneously peels from the support. The spontaneous peeling takes place by virtue of thermal stresses arising from the difference between the shape (size, thickness, etc.), physical properties (coefficient of thermal expansion, modulus, etc.) and the surface state as blasted of the support and the physical properties (coefficient of thermal expansion, modulus, etc.) of the sprayed coating. The desired thin plate is obtained by utilizing the spontaneous peeling force of the sprayed coating from the support. In the case of a large size support, if the material, thickness and surface state of the support do not match with the sprayed coating, cracks develop in the coating when it spontaneously peels from the support. Then the desired thin plate is not available. The thickness of the sprayed coating when it spontaneously peels from the support largely varies with the material, shape, thickness and surface state of the support and the type of the sprayed coating. Typically spontaneous peeling occurs when the sprayed coating reaches a thickness of 1 mm or more.

It is noted that the sprayed coating, when peeled from the support, has an inner surface which is exposed as a result of peeling and an outer surface remote therefrom. After peeling, the inner surface of the sprayed coating may have residues of the support material carried thereon. Such residues may be removed by suitable techniques including blasting, polishing, chemical treatment and firing treatment.

The sprayed coating which has spontaneously peeled from the support may have some deformation (warpage or deflection) introduced by thermal stresses. Such deformation can be avoided by tailoring the support shape. Such deformation is corrected by heat treatment or by applying additional coating to the inner surface of the sprayed coating which is exposed as a result of spontaneous peeling, and preferably by providing additional coating layers by thermal spraying. The heat treatment for correction may be at 800°C to 1700°C for 1 to 10 hours.

By applying an additional coating to the inner surface of the sprayed coating, the deformation by thermal stress is corrected accordingly and eventually to substantially zero when the additional coating reaches a certain thickness. From the point of time when deformation or warpage is eliminated, thermal spraying is continued alternately on the inner and outer surfaces of the sprayed coating until the thin plate reaches the predetermined thickness. The material to be deposited on the inner surface is rare earth-based oxide. Since thin plates often have more or less warpage, it is advantageous to apply additional layer by thermal spraying for correcting the warpage. Additional layers can be deposited on the sprayed plate by other methods including sputtering, plating, and evaporation. The additional multilayer coating may have a thickness of about 0.01 mm to about 5 mm though the thickness is not limited thereto.

The metal compounds used in the additional layers include rare earth oxides. Lamination of rare earth compounds is preferred for adherence.

Depending on the intended application, the resulting rare earth oxide thin plate may be used as such or worked prior to use. Namely, the thin plate may be worked, for example, by cutting, machining, grinding, or mirror polishing, whereby it is finished to the desired shape and surface state so that it is ready for use.

As a variant of the method, a thin plate having alternately deposited layers of different oxides can be manufactured. For example, a thin plate having 200-µm thick layers of yttrium oxide and erbium oxide alternately deposited to a total thickness of about 3 mm can be manufactured. It is also possible that a layer of an element or compound (e.g., metal) different from the rare earth oxide intervene between thermally sprayed coatings. The invention enables to manufacture rare earth oxide composite thin plates which could not be manufactured by the standard ceramic molding techniques. In the application where a high purity is required, thin plates of high purity can be manufactured by using the carbon support and the powdered source to be sprayed of high purity, conducting thermal spraying in a clean environment, and effecting post-treatment such as acid washing, alkali washing, organic solvent washing, heat treatment, or precision cleaning.

The plate manufactured by the invention is advantageously used as members (which must be plasma resistant) in semiconductor device processing chambers, laminate members having an electrode pattern of tungsten or the like formed therein and capable of producing an electrostatic force such as members in electrostatic chucks, and setters used in sintering of magnet alloys.

### EXAMPLE

Examples of the invention are given below by way of illustration, but not by way of limitation.

### Example 1

There was furnished a CIP carbon support of 250 x 250 x 5 mm. Prior to plasma spraying, the surface of the support was roughened by blasting. Then a powdered source for Y₂O₃ spraying was plasma sprayed in an atmosphere of argon and hydrogen. When the sprayed Y₂O₃ coating reached a thickness of 1.2 mm, it spontaneously peeled from the support. A Y₂O₃ ceramic thin plate was obtained. By measurement using a clearance gauge, the thin plate was found to have a warpage of more than 1 mm at opposite ends. To correct the warpage, thermal spraying was continued on the inner (peeled) surface of the Y₂O₃ thin plate until the additional coating built up 0.8 mm thick. There was obtained a Y₂O₃ ceramic thin plate of 250 x 250 x 2 mm which showed a minimized warpage of less than 0.5 mm.

It is noted that the warpage of a sprayed thin plate was measured as follows. The sprayed thin plate was rested on a marble table. If the plate is rectangular, the clearance gauge is applied to the rectangular plate at twelve points spaced clockwise along the outer periphery thereof (3 points on one side) to measure a warpage. After measurement on the front surface, the plate is turned up side down, and measurement is performed on the rear surface again. An average of all measurements is reported as a warpage. If the plate is circular, the clearance gauge is applied to the disc at eight points spaced clockwise along the outer periphery thereof to measure a warpage. After measurement on the front surface, the disc is turned up side down, and measurement is performed on the rear surface again. An average of all measurements is reported as a warpage.

### Example 2

There was furnished a CIP carbon support of 400 mm diameter and 20 mm thick. Prior to plasma spraying, the support surface was roughened by blasting. Then a powdered source for Y₂O₃ spraying was plasma sprayed in an atmosphere of argon and hydrogen. When the sprayed Y₂O₃ coating reached a thickness of 1.5 mm, it spontaneously peeled from the support. A Y₂O₃ ceramic thin disc was obtained. By measurement using a clearance gauge, the thin disc was found to have a warpage of more than 3 mm at diametrically opposite ends. To correct the warpage, thermal spraying was continued on the inner (peeled) surface of the Y₂O₃ thin disc until the additional coating built up 1.0 mm thick. There was obtained a Y₂O₃ ceramic thin disc of 400 mm diameter and 2.5 mm thick which showed a minimized warpage of less than 0.5 mm. After the warpage correction, thermal spraying was continued alternately on the inner and outer surfaces of the disc, yielding a Y₂O₃ ceramic thin disc of 400 mm diameter and 3.5 mm thick. By subsequent surface grinding, the disc was finished into a Y₂O₃ ceramic thin disc of 400 mm diameter and 2.5 mm thick and having a warpage of 0 mm.

### Example 3

There was furnished a CIP carbon ring support having an outer diameter 400 mm, an inner diameter 200 mm and a thickness 5 mm. Prior to plasma spraying, the support surface was roughened by blasting. Then a powdered source for YAG spraying was plasma sprayed in an atmosphere of argon and hydrogen. When the sprayed YAG coating reached a thickness of 1.3 mm, it spontaneously peeled from the support. A YAG ceramic thin ring was obtained. By measurement using a clearance gauge, the thin ring was found to have a warpage of more than 2 mm at opposite ends. To correct the warpage, thermal spraying was continued on the inner (peeled) surface of the YAG thin ring until the additional coating built up 0.7 mm thick. There was obtained a YAG ceramic thin ring having an outer diameter 400 mm, an inner diameter 200 mm and a thickness 2 mm which showed a minimized warpage of less than 1 mm.

### Comparative Example 1

There was furnished a metal mold of 250 x 250 mm square. The mold was filled with a powdered source for Y₂O₃ pressing. In an attempt to form a molded body of 2 mm thick, the press was forced while adjusting the cavity. Upon removal from the mold, the molded body cracked, indicating a failure to produce a molded body of 250 x 250 mm square.

### Comparative Example 2

There was furnished a neoprene rubber mold of 400 mm diameter and 10 mm depth. The rubber mold was filled with a powdered source for Y₂O₃ pressing. Using an isostatic press, the material was molded under a hydraulic pressure of 2 ton/cm². A molded body of 400 mm diameter and 8 mm thick was obtained while its circumferential edge partially chipped. The molded body had so low a strength that it cracked due to warpage during subsequent sintering, indicating a failure to manufacture a sintered rare earth oxide ceramic disc having a diameter of 400 mm.

### Example 4

There was furnished a CIP carbon support of 400 mm diameter and 20 mm thick. Prior to plasma spraying, the support surface was roughened by blasting. Then a powdered source for Er₂O₃ spraying was plasma sprayed in an atmosphere of argon and hydrogen. When the sprayed Er₂O₃ coating reached a thickness of 1.2 mm, it spontaneously peeled from the support. A Er₂O₃ thin disc was obtained. By measurement using a clearance gauge, the thin disc was found to have a warpage of more than 3 mm at opposite ends. To correct the warpage, thermal spraying was continued on the inner (peeled) surface of the Er₂O₃ thin disc. The powdered source for additional spraying was tungsten powder. When the tungsten coating built up 0.7 mm thick, there was obtained a Er₂O₃ /tungsten thin disc of 400 mm diameter and 1.9 mm thick which showed a minimized warpage of less than 0.5 mm.

### Example 5

There was furnished a CIP carbon support of 400 mm diameter and 20 mm thick. Prior to plasma spraying, the support surface was roughened by blasting. Then a powdered source for Y₂O₃ spraying was plasma sprayed in an atmosphere of argon and hydrogen. When the sprayed coating built up 200 µm thick, the source was changed to a powdered source for Er₂O₃ spraying, which was sprayed under the same conditions to a buildup of 200 µm. In this way, alternate spraying of Y₂O₃ and Er₂O₃ each to a buildup of 200 µm was continued. When the sprayed Y₂O₃/Er₂O₃ coating reached a thickness of 1.4 mm, it spontaneously peeled at the interface between the carbon support and Y₂O₃. A multilayer Y₂O₃/Er₂O₃ ceramic thin disc was obtained. By measurement using a clearance gauge, the thin disc was found to have a warpage of more than 2 mm at opposite ends. To correct the warpage, spraying of alternate Y₂O₃ and Er₂O₃ layers was continued on the inner (peeled) surface of the Y₂O₃/Er₂O₃ thin disc until the additional coating built up 1.0 mm thick. There was obtained a ceramic thin disc of alternate Y₂O₃/Er₂O₃ layers of 400 mm diameter and 2.4 mm thick which showed a minimized warpage of less than 0.5 mm. After the warpage correction, the disc was cut into two for sectional observation. The cut section was observed under a microscope, finding a multilayer structure consisting of Y₂O₃ layers of about 200 µm thick and Er₂O₃ layers of about 200 µm thick.

### Example 6

There was furnished a CIP carbon support of 400 mm diameter and 20 mm thick. Prior to plasma spraying, the support surface was roughened by blasting. Then a powdered source for Y₂O₃ spraying was plasma sprayed in an atmosphere of argon and hydrogen. When the sprayed coating built up 800 µm thick, a mask for forming an electrode pattern was applied. A powdered source for tungsten spraying was sprayed over the mask to deposit a tungsten layer of about 200 µm thick. Only the electrode terminal portions were left, the source was changed to Y₂O₃, and spraying was effected again. When the sprayed (Y₂O₃ + tungsten) coating reached a thickness of 1.4 mm, it spontaneously peeled from the support. A tungsten-buried Y₂O₃ ceramic thin disc was obtained. By measurement using a clearance gauge, the thin disc was found to have a warpage of more than 4 mm at opposite ends. To correct the warpage, Y₂O₃ spraying was continued on the inner (peeled) surface of the tungsten-buried Y₂O₃ thin disc until the additional coating built up 0.8 mm thick. There was obtained a tungsten electrode-buried Y₂O₃ ceramic thin disc of 400 mm diameter and 2.2 mm thick which showed a minimized warpage of less than 0.5 mm.

### Example 7

There was furnished a CIP carbon support of 400 mm diameter and 20 mm thick. Prior to plasma spraying, the support surface was roughened by blasting. Then a powdered source for Y₂O₃ spraying was plasma sprayed in an atmosphere of argon and hydrogen. When the sprayed Y₂O₃ coating reached a thickness of 1.5 mm, it spontaneously peeled from the support. A Y₂O₃ ceramic thin disc was obtained. By measurement using a clearance gauge, the thin disc was found to have a warpage of more than 3 mm at opposite ends. To correct the warpage, thermal spraying was continued on the inner (peeled) surface of the Y₂O₃ thin disc, using yttrium fluoride (YF₃) powder as the source. When the additional coating was deposited to a thickness of 1.0 mm, there was obtained a Y₂O₃/YF₃ ceramic thin disc of 400 mm diameter and 2.5 mm thick which showed a minimized warpage of less than 0.5 mm.

### Example 8

There was furnished a CIP carbon support of 400 mm diameter and 20 mm thick. Prior to plasma spraying, the support surface was roughened by blasting. Then a powdered source for Y₂O₃ spraying was plasma sprayed in an atmosphere of argon and hydrogen. When the sprayed Y₂O₃ coating reached a thickness of 1.5 mm, it spontaneously peeled from the support. A Y₂O₃ ceramic thin disc was obtained. By measurement using a clearance gauge, the thin disc was found to have a warpage of more than 3 mm at opposite ends. To correct the warpage, thermal spraying was continued on the inner (peeled) surface of the Y₂O₃ thin disc, using an alumina (Al₂O₃) powder as the source. When the additional coating was deposited to a thickness of 0.5 mm, there was obtained a Y₂O₃/Al₂O₃ ceramic thin disc of 400 mm diameter and 2.0 mm thick which showed a minimized warpage of less than 0.5 mm.

### Example 9

There was furnished a CIP carbon support of 400 mm diameter and 5 mm thick. Prior to plasma spraying, the support surface was roughened by blasting. Then a powdered source for Y₂O₃ spraying was plasma sprayed in an atmosphere of argon and hydrogen. When the sprayed Y₂O₃ coating reached a thickness of 0.9 mm, it spontaneously peeled from the support. A Y₂O₃ ceramic thin disc was obtained. By measurement using a clearance gauge, the thin disc was found to have a warpage of more than 10 mm at opposite ends. The Y₂O₃ thin disc was heat treated in an oxidizing atmosphere furnace in order to remove carbon deposits on the inner (peeled) surface of the disc and to correct the warpage. By the heat treatment, the warpage was corrected to less than 0.5 mm. On the inner and outer surfaces of the Y₂O₃ thin disc which had been corrected for warpage, thermal spraying of Y₂O₃ was continued. There was obtained a Y₂O₃ thin disc of 400 mm diameter and 2 mm thick which showed a minimized warpage of less than 0.5 mm.

## Claims

1. A method for preparing a rare earth oxide-containing sprayed plate, comprising thermally spraying a rare earth-based oxide of Y or Er on a carbon support to form a coating, and
peeling the sprayed coating from the support by spontaneous peeling, wherein spray coating is conducted so that the sprayed casting reaches a thickness of 1 mm or more to allow spontaneous peeling to occur,
treating the inner surface of the sprayed coating which is exposed as a result of spontaneous peeling by heat treatment or by applying additional coating, and
thermally spraying additional layers of a rare earth-based oxide on the inner and/or outer surface of the sprayed coating, to form a coating having a thickness of more than 1 to 5 mm.

2. The method according to claim 1 wherein the support is surface treated by blasting.

3. A method for preparing a laminate, comprising thermally spraying a metal or metal compound on a surface of the sprayed plate obtained by the method of claim 1 or 2.

## Patentansprüche

1. Verfahren zur Herstellung einer seltenerdoxid-haltigen gesprühten Platte, umfassend thermisches Sprühen eines seltenerd-basierten Oxids von Y oder von Er auf einen Kohlenstoffträger, um eine Beschichtung zu bilden, und
Abschälen der gesprühten Beschichtung von dem Träger durch spontanes Abschälen, wobei das Sprühbeschichten so durchgeführt wird, dass der gesprühte Guss eine Dicke von 1 mm oder mehr erreicht, um das Auftreten des spontanen Abschälens zu erlauben, Behandeln der Innenoberfläche der gesprühten Beschichtung, welche als ein Ergebnis des spontanen Abschälens freiliegt, durch Wärmebehandeln oder durch Aufbringen zusätzlicher Beschichtung, und
thermisches Sprühen zusätzlicher Schichten aus einem seltenerd-basierten Oxid auf die Innen- und/oder Außenoberfläche der gesprühten Beschichtung, um eine Beschichtung mit einer Dicke von mehr als 1 bis 5 mm zu bilden.

2. Verfahren nach Anspruch 1, wobei der Träger durch Abstrahlen oberflächenbehandelt wird.

3. Verfahren zur Herstellung eines Laminats, umfassend thermisches Sprühen eines Metalls oder einer Metallverbindung auf eine Oberfläche der durch das Verfahren nach Anspruch 1 oder 2 erhaltenen, gesprühten Platte.

## Revendications

1. Procédé de préparation d'une plaque pulvérisée contenant de l'oxyde de terre rare, comprenant la pulvérisation thermique à base d'oxyde de terre rare de Y ou de Er sur un support de carbone afin de former un revêtement, et
le pelage du revêtement pulvérisé à partir du support par pelage spontané, dans lequel le revêtement par pulvérisation est effectué de telle manière que le moulage pulvérisé atteint une épaisseur de 1 mm ou plus afin de permettre un pelage spontané d'avoir lieu,
le traitement de la surface intérieure du revêtement pulvérisé qui est exposé comme résultat du pelage spontané par un traitement thermique ou par une application d'un revêtement supplémentaire, et
la pulvérisation thermique de couches supplémentaires d'un oxyde de terre rare sure la surface intérieure et / ou extérieure du revêtement pulvérisé, afin de former un revêtement ayant une épaisseur supérieure à 1 à 5 mm.

2. Le procédé selon la revendication 1, dans lequel le support est traité en surface par sablage.

3. Procédé de préparation d'un stratifié, comprenant la pulvérisation thermique d'un métal ou composé de métal sur une surface de la plaque pulvérisée obtenue par le procédé selon la revendication 1 ou 2.
